# EUROPEAN PATENT APPLICATION

(11) **EP 1 752 863 A2**
(43) Date of publication of application: **14.02.2007**
(21) Application number: 06117266.4
(22) Date of filing: 14.07.2006
(51) Int. Cl.: G06F 3/023

(54) **Method and apparatus for selecting a button in a menu**

(30) Priority: 18.07.2005 KR 20050064786
(71) Applicant: Samsung Electronics Co., Ltd., Suwon-si 442-742 Gyeonggi-Do (KR)
(72) Inventor: Kang, Man-seok, Yeongtong-gu, Suwon-si, Gyeonggi-do (KR); Ko, Jung-wan, Suwon-si, Gyeonggi-do (KR)
(74) Representative: Robinson, Ian Michael

(57) **Abstract**

A method and apparatus for controlling reproduction of a menu are provided to a user interface for interaction with users. The method includes: confirming the maximum number value in selection number values of one or more buttons in the menu; receiving a number value of number keys input by a user; comparing a digit of the input number value with a digit of the maximum number value; and if the digit of the input number value matches the digit of the maximum number value, setting up a button having the selection number value corresponding to the input number value as a selection state. As a result, unnecessary waiting time can be reduced, thereby increasing user convenience.

## Description

The present invention relates to a method and apparatus for controlling a reproduction of a menu in a user interface for interaction with users.

Many PC users have recently been exposed to a variety of digital media apparatuses in addition to a television. Most digital media apparatuses, such as laptop computers, portable phones, digital recorders and personal digital assistants (PDAs), digital cameras and other image devices, provide a user interface including buttons to perform, if users select the button, a function corresponding to the selected button.

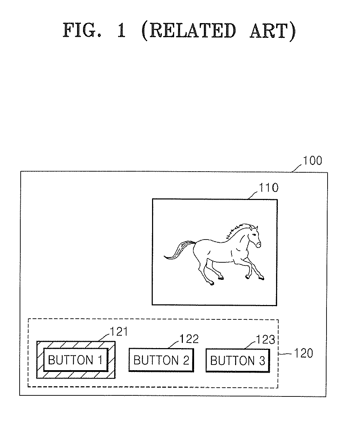

Figure 1 is a diagram of a typical method of selecting a button from a menu. Referring to Figure 1, a user interface 100 partly provides video data 110 and a menu 120 for interaction with a user. The menu 120 includes buttons #1, #2, and #3 121 through 123 so that a user can select a predetermined function.

When the user selects a number value from 0 through 999, via an input number key, which represents information for selecting a button in button information of the menu, the user inputs a value of three digits, or alternatively, inputs a value of a single digit or a value of two digits, waits for a predetermined time without inputting any number key, searches for a button having a selection number value corresponding to the input number value, and, if a corresponding button is searched, sets up the button as a selection state.

In the menu 120, it is assumed that selection values of a digit "1", "2", and "3" are allotted to the buttons #1, #2, and #3, respectively. In this regard, if the user selects buttons by inputting a number key, the user inputs "0", "0", and "1", or stands by for a predetermined time without inputting any number key after inputting "1" in order to select a button to which selection values of a digit "1" is allotted. In either selection, there is unnecessary waiting time required for a user to input a key and wait until a desired button is selected.

According to the present invention there is provided an apparatus and method as set forth in the appended claims. Preferred features of the invention will be apparent from the dependent claims, and the description which follows.

Various aspects and example embodiments of the present invention provide a method and apparatus for controlling a reproduction of a menu in a user interface for interaction with users by which a button can be selected from the menu without unnecessary waiting time, thereby increasing user convenience.

Additional aspects and/or advantages of the invention will be set forth in part in the description which follows and, in part, will be obvious from the description, or may be learned by practice of the invention.

In accordance with an embodiment of the present invention, a method of controlling a reproduction of a menu in a user interface for interaction with users, is provided with: confirming the maximum number value in selection number values of one or more buttons in the menu; receiving a number value of number keys input by a user; comparing a digit of the input number value with a digit of the maximum number value; and if the digit of the input number value matches the digit of the maximum number value, setting up a button having the selection number value corresponding to the input number value as a selection state.

According to an aspect of the present invention, if the digit of the input number value does not match the digit of the maximum number value, comparing a value obtained by dividing the maximum number value by 10 with the input number value; and if the value obtained by dividing the maximum number value by 10 is less than the input number value, setting up a button having the selection number value corresponding to the input number value as the selection state.

In accordance with another embodiment of the present invention, an apparatus for controlling reproduction of a menu in a user interface for interaction with users, comprises: a button selection processor confirming the maximum number value in selection number values of one or more buttons in the menu, receiving a number value of number keys input by a user, comparing a digit of the input number value with a digit of the maximum number value, and, if the digit of the input number value matches the digit of the maximum number value, setting up a button having the selection number value corresponding to the input number value as a selection state.

According to an aspect of the present invention, the button selection processor, if the digit of the input number value does not match the digit of the maximum number value, may compare a value obtained by dividing the maximum number value by 10 with the input number value, and, if the value obtained by dividing the maximum number value by 10 is less than the input number value, set up a button having the selection number value corresponding to the input number value as the selection state.

In accordance with yet another embodiment of the present invention, a computer readable medium having embodied thereon a computer program for executing method of controlling a reproduction of a menu in a user interface for interaction with users, the method comprising: confirming the maximum number value in selection number values of one or more buttons in the menu; receiving a number value of number keys input by a user; comparing a digit of the input number value with a digit of the maximum number value; and if the digit of the input number value matches the digit of the maximum number value, setting up a button having the selection number value corresponding to the input number value as a selection state.

In addition to the example embodiments and aspects as described above, further aspects and embodiments will be apparent by reference to the drawings and by study of the following descriptions.

A better understanding of the present invention will become apparent from the following detailed description of example embodiments and the claims when read in connection with the accompanying drawings, all forming a part of the disclosure of this invention. While the following written and illustrated disclosure focuses on disclosing example embodiments of the invention, it should be clearly understood that the same is by way of illustration and example only and that the invention is not limited thereto. The spirit and scope of the present invention are limited only by the terms of the appended claims. The following represents brief descriptions of the drawings, wherein:
Figure 1 is a diagram of a typical method of selecting a button from a menu;
Figure 2 is a schematic block diagram of an apparatus for controlling reproduction of a video stream according to an embodiment of the present invention;
Figure 3 is a block diagram of a constitution of an example audio-visual (AV) data stream used to reproduce an image according to an embodiment of the present invention;
Figure 4 illustrates an example menu constituted using menu data on a screen;
Figure 5 illustrates a method of selecting a button by inputting a number key according to an embodiment of the present invention;
Figure 6 is a flowchart of a method of selecting a button from a menu according to an embodiment of the present invention;
Figure 7 illustrates an example remote controller for selecting a TV channel by using the method of selecting a button according to an embodiment of the present invention; and
Figure 8 illustrates an example digital camera using the method of selecting a button according to an embodiment of the present invention.

Reference will now be made in detail to the present embodiments of the present invention, examples of which are illustrated in the accompanying drawings, wherein like reference numerals refer to the like elements throughout. The embodiments are described below in order to explain the present invention by referring to the figures.

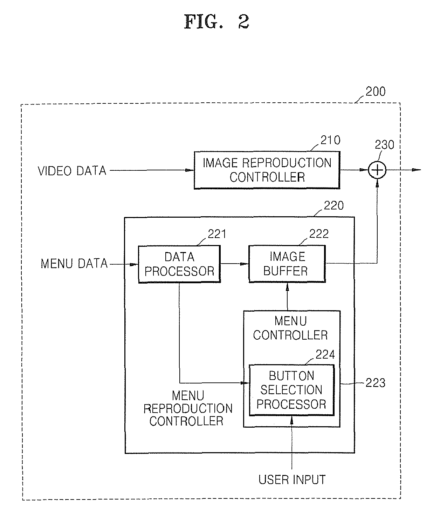

Figure 2 is a schematic block diagram of an apparatus 200 for controlling reproduction of a video stream according to an embodiment of the present invention. Referring to Figure 2, the apparatus 200 includes an image reproduction controller 210, a menu reproduction controller 220, and a blender 230.

The apparatus 200 is further provided with a read unit (not shown) to download an audio-visual (AV) data stream from a recording medium, such as an optical disc (not shown); to separate video, audio, and menu data from the AV data stream, and then transmit video data to the image reproduction controller 210, and transmit menu data to the menu reproduction controller 220. Such an optical disc can be any high-density medium, such as blue-ray disc (BD) and advanced optical disc (AOD); however, other optical discs can also be utilized, including DVD, DVD-R, DVD-RW, DVD+RW, DVD-RAM, DVD-ROM, CD, CD-R, CD-RW, and CD-ROM.

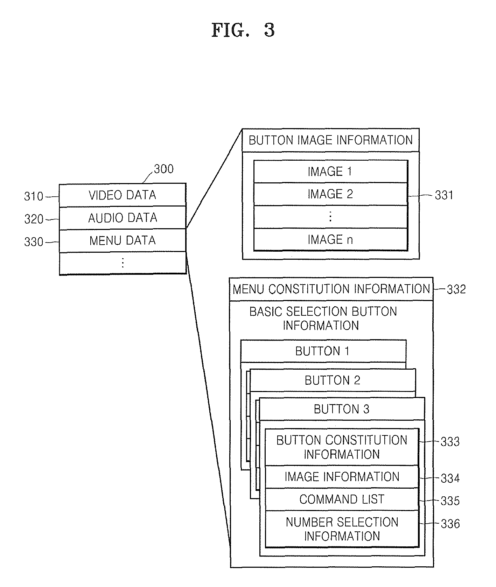

The constitution of the AV data stream will now be described with reference to Figure 3 herein below.

Figure 3 is a block diagram of a constitution of the AV data stream 300 used to reproduce an image according to an embodiment of the present invention. Referring to Figure 3, the AV data stream 300 includes video data 310 for video output, audio data 320 for audio output, and menu data 330 for providing a menu to a user.

The menu data 330 includes image information 331 of a button to be displayed on a screen and menu constitution information 332 for constituting a menu to be displayed on the screen. The menu constitution information 332 includes basic selection button information that contains information of a plurality of buttons and information on a button designating a selection state when activating an initial menu. Button constitution information 333 of each button includes button image information 334, command language information 335 used when each button is pushed, and number selection information 336 for selecting a button by a user's input, via a number key. The menu data 330 can be multiplexed in the AV data stream, or independently recorded in a file.

Referring to Figure 2, the image reproduction controller 210 decodes received video data and outputs the decoded data to the blender 230.

The menu reproduction controller 220 receives the menu data 330, decodes the received data, and outputs the decoded data to the blender 230. The menu reproduction controller 220 includes a data processor 221, an image buffer 222, and a menu controller 223.

The data processor 221 outputs the button image obtained by receiving the menu data 330 and decoding the received data to the image buffer 222, and outputs the decoded menu constitution information 332, as shown in Figure 3, to the menu controller 223.

The menu controller 223 activates the menu at a designated time using the input menu constitution information 332, as shown in Figure 3, displays buttons included in the menu constitution information 332 on the screen, sets up a button indicated by the basic selection button information as a selection state, and controls the menu according to a key input by the user. The user inputs direction keys, such as upper/lower/left/right keys, to move between the buttons of the menu. When number keys are allotted to each of the buttons of the menu, the user inputs number keys, such as number keys from "0" through "9" in addition to the upper/lower/left/right keys, thereby selecting a specific button. In addition, the user also inputs a confirm key to perform a command language included in a command list 335, as shown in Figure 3, of the button in the current selection state.

The menu controller 223 includes a button selection processor 224 to effectively process a button selection operation provided in the menu according to an embodiment of the present invention. As described above, to reduce the waiting time required for the user to input a key and wait until a desired button is selected, the button selection processor 224 searches for all the selection number values of the buttons included in the menu displayed on a screen when the menu constitution information 332 is initially activated, finds the maximum selection number value. If the user inputs a number key, the button selection processor 224 compares the input number value with the maximum button selection number value, in case where it is possible to compare the input number value with the button selection number value, and compares the input number value with all the currently displayed button selection number values.

When it is possible to compare the input number value with the button selection number value indicates that (1) the input number value has the same value of a digit as the maximum button selection number value; or (2) the input number value results in a number value exceeding the maximum button selection number value. That is, in case (1), if the maximum button selection number value is "123", the input number value is a value of three digits. In case (2), a value obtained by dividing the maximum button selection number value by a predetermined constant, such as 10, is less than the input number value. The detailed operation will now be described below.

The blender 230 blends a menu screen on a video screen created by the image reproduction controller 210 and outputs the blended menu screen.

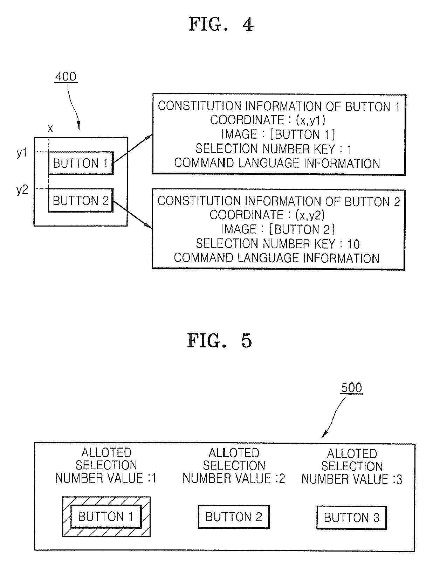

Figure 4 illustrates an example menu 400 constituted using menu data on a screen. Referring to Figure 4, if the menu constitution information 332 stored in the menu controller 223 is activated, the menu controller 223 controls the button #1 to output an image "button 1" in a coordinate (x, y1) and the button #2 to output an image "button 2" in a coordinate (x, y2) using the button constitution information of the buttons #1 and #2 included in the menu constitution information 332, and sets up the button #1 as a selection state using basic selection button information included in the menu constitution information 332, as shown in Figure 3. Thereafter, a user can change a button in the selection state by inputting a direction key or a number key and execute a command language of the button in the selection state by inputting a confirm key.

Figure 5 illustrates a method of selecting a button by inputting a number key according to an embodiment of the present invention. Referring to Figure 5, the button selection processor 224 searches for a selection number key of each of the buttons #1, #2, and #3, when the menu 400, shown in Figure 4, is activated. The button selection processor 224 then determines that the maximum selection number value is 3, and displays the buttons #1, #2, and #3 on a screen. Thereafter, if a user inputs a number key "1", the button selection processor 224 compares the maximum digit of the selection number value determined when the menu 400 is activated with a digit of the input number value, determines that both digits are identical to each other, compares selection number values of each of the buttons #1, #2, and #3 with the digit of the input number value, and sets up the button #1 having the same selection number value as the input number value "1" as a selection state.

When all the buttons in the menu displayed on the screen are set up as a selection number value of a digit in a recording medium, such as an optical disc (not shown), using the menu constitution information 332 that allows a value of more than two digits as a selection number value, the method of selecting a button by inputting a number key can reduce the inconvenience caused by a user's input of an unnecessary number, or a user's wait for a predetermined time after the number is input.

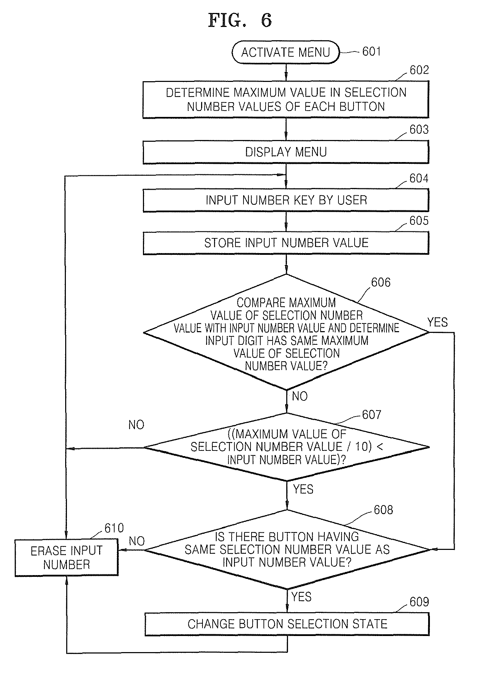

Figure 6 is a flowchart of a method of selecting a button from a menu according to an embodiment of the present invention. Referring to Figure 6, when a menu is initially activated at operation 601, the button selection processor 224 searches for selection number values of all the buttons displayed on a menu screen and determines a digit of a selection number value having the maximum value of each button at operation 602, and displays the menu screen on the screen at operation 603, and then waits for a key input of a user.

When a number key is input by the user at operation 604, the button selection processor 224 stores a number value of the input number key at operation 605.

The button selection processor 224 compares the maximum value of the selection number value with the input number value, and determines whether the digit of the maximum value of the selection number value is the same as the digit of the input number value at operation 606. If the button selection processor 224 determines that both digits are identical to each other, the button selection processor 224 searches for a button having the same selection number value as the input number value without waiting for a user's additional input at operation 608. If the button selection processor 224 finds the button having the same selection number value as the input number value, the button selection processor 224 sets up the button corresponding to the input number value as a selection state at operation 609, and erases the input number value at operation 610.

If the button selection processor 224 determines that the digits are not identical to each other, the button selection processor 224 determines whether a value obtained by dividing the maximum value of the selection number value by 10 is less than the input number value at operation 607. If the button selection processor 224 determines that the value obtained by dividing the maximum value of the selection number value by 10 is less than the input number value, since the user's additional input results in a value exceeding the maximum value of the selection number value, the button selection processor 224 searches for a button having the same selection number value as the input number value at operation 608.

For example, in case where the maximum range of the selection number value is "999", and the maximum value of the selection number value of a button provided to the menu is 321, if the input number value is a number of three digits, operation 608 is performed after operation 606 is performed. In addition, if the input number value is not a number of three digits, operation 607 is performed after operation 606 is performed.

In operation 607, a value "32" obtained by dividing the maximum value by 10 is compared with the input number value. If the input number value is larger than 32, since an additional input of a number key results in an input value exceeding the maximum value, operation 608 is performed to compare the selection number value with the input number value. If the input number value is less than or the same as "32", since an additional input of a number key results in an input value which is compared with the selection number value, operation 604 is performed for the additional input of the number key.

The method according to an embodiment of the present invention is not limited to the menu included in the AV data stream, and can be also applied to any reproducing apparatus for outputting and reproducing an image.

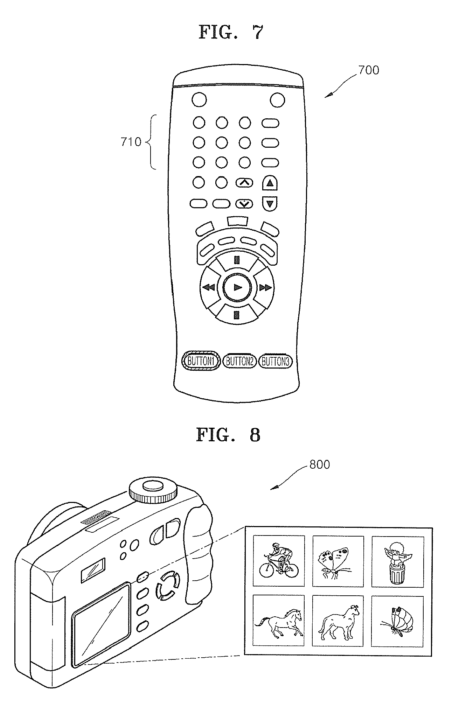

Figure 7 illustrates a remote controller for selecting a TV channel using the method of selecting a button according to an embodiment of the present invention. Referring to Figure 7, a method of selection a channel in a TV system (not shown) may be applied when inputting a number key to select a channel registered in the TV system. In detail, when channels 1 through 23 are registered in the TV system and a user selects a channel by inputting a number key of the remote controller 700, when the user inputs a number key of two digits, the selection channel is compared with the registered channels. When the user inputs a number key of a digit, the input value of the digit is compared with a value obtained by dividing the maximum value of the registered channels by 10. If the input value is larger than the value, the selection channel is compared with the registered channels. If the input value is less than or the same as the value, a second input of a number key is waited.

Figure 8 illustrates a digital camera using the method of selecting a button according to an embodiment of the present invention. Referring to Figure 8, the method of selecting a button is applied to an input of a number key to select a plurality of thumbnail images or a plurality of data in the digital camera 800 or other image devices capturing an image in the same manner as described in Figure 7. In particular, when there are 23 thumbnail images or data and each of the thumbnail images or data is selected by sequentially inputting number keys 1 through 23, when a number of two digits is input, the input number value is compared with a number value allotted to each of data. When a number of a digit is input, a value (23 /10) =2 is compared with the input number value. If the input number value is larger than the value (23 /10) =2, the input number value is compared with number values allotted to each of data.

As described above, the present invention can be widely applied to the method of selecting a button of a menu using a number key. According to an embodiment of the present invention, the menu controller including the button selection processor, as shown in Figure 2, can also be one or more software modules written in C or C++ languages. However, such modules can also be written in a variety of software languages, including Java, Visual Basic, and many other languages over the Internet. The various software modules may also be integrated in a single application executed on one or more control units (not shown), such as a microprocessor, a microcontroller, or a processor card (including one or more microprocessors or microcontrollers) in a reproducing apparatus. These software modules may include data and instructions which can also be stored on one or more machine-readable storage media, such as dynamic or static random access memories (DRAMs or SRAMs), erasable and programmable read-only memories (EPROMs), electrically erasable and programmable read-only memories (EEPROMs) and flash memories; magnetic disks such as fixed, floppy and removable disks; other magnetic media including tape; and optical media such as compact discs (CDs) or digital video discs (DVDs). Instructions of the software routines or modules for executing functions shown in Figure 6 may also be loaded into a reproducing apparatus in one of many different ways. For example, code segments including instructions stored on floppy discs, CD or DVD media, a hard disk, or transported through an interface card, modem, or other interface device may be loaded into a reproducing apparatus and executed as corresponding software routines or modules. In the loading or transport process, data signals that are embodied as carrier waves (transmitted over telephone lines, network lines, wireless links, cables, and the like) may communicate the code segments, including instructions, to the network node or element. Such carrier waves may be in the form of electrical, optical, acoustical, electromagnetic, or other types of signals.

As described above, according to the present invention, a user can select a button from a menu provided in a use interface for interaction with users without unnecessary waiting time, thereby increasing user convenience.

While the present invention has been particularly shown and described with reference to exemplary embodiments thereof, it will be understood by those of ordinary skill in the art that various changes in form and details may be made therein without departing from the spirit and scope of the present invention. As a result, many modifications, permutations, additions and subcombinations may be made to adapt the teachings of the present invention to a particular situation without departing from the scope thereof. For example, alternative embodiments of the invention can be implemented as a computer program product for use with a computer system. Such a computer program product can be, for example, a series of computer instructions stored on a tangible data recording medium, such as a diskette, CD-ROM, ROM, or fixed disk, or embodied in a computer data signal, the signal being transmitted over a tangible medium or a wireless medium, for example microwave or infrared. The series of computer instructions can constitute all or part of the functionality described above, and can also be stored in any memory device, volatile or non-volatile, such as semiconductor, magnetic, optical or other memory device. In addition, a reproducing apparatus as shown in Figure 2 can be implemented as part of a recording apparatus, or alternatively a single apparatus for performing recording and/or reproducing functions with respect to a storage medium. Such a reproducing apparatus may be a single apparatus, or may be incorporated into a recording/reproducing apparatus. Likewise, the CPU can be implemented as a chipset having firmware, or alternatively, a general or special purposed computer programmed to perform the methods as described, for example, with reference to Figure 6.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of controlling a reproduction of a menu in a user interface for interaction with users, the method comprising:
confirming a maximum number value in selection number values of one or more buttons in the menu;
receiving a number value of number keys input by a user;
comparing a digit of the input number value with a digit of the maximum number value; and
if the digit of the input number value matches the digit of the maximum number value, setting up a button having the selection number value corresponding to the input number value as a selection state.

2. The method as claimed in claim 1, further comprising:
if the digit of the input number value does not match the digit of the maximum number value, comparing a value obtained by dividing the maximum number value by 10 with the input number value; and
if the value obtained by dividing the maximum number value by 10 is less than the input number value, setting up a button having the selection number value corresponding to the input number value as the selection state.

3. The method as claimed in claim 1 or 2, wherein the menu is activated for a visual display on a screen at a designated time, and buttons are included in the menu on the screen for the user's selection.

4. The method as claimed in claim 1, 2 or 3, wherein the button having the selection number value corresponding to the input number value is set up to reduce a waiting time required for the user to input a key and wait until a desired button is selected, via the menu.

5. A computer readable medium having embodied thereon a computer program for executing a method of controlling a reproduction of a menu in a user interface for interaction with users, where the method is as set forth in any of claims 1 to 4.

6. An apparatus (200) for controlling reproduction of a menu in a user interface for interaction with users, the apparatus (200) comprising:
a user interface unit (220) installed to enable a user to interact and reproduce a menu on a screen, including a visual display of buttons in the menu; and
a button selection processor (224) configured to confirm a maximum number value in selection number values of one or more buttons in the menu, to receive a number value of number keys input by the user, to compare a digit of the input number value with a digit of the maximum number value, and, if the digit of the input number value matches the digit of the maximum number value, to set up a button having the selection number value corresponding to the input number value as a selection state.

7. The apparatus as claimed in claim 6, wherein the button selection processor (224) is further configured to compare, if the digit of the input number value does not match the digit of the maximum number value, a value obtained by dividing the maximum number value by 10 with the input number value, and, if the value obtained by dividing the maximum number value by 10 is less than the input number value, to set up a button having the selection number value corresponding to the input number value as the selection state.

8. The apparatus (200) as claimed in claim 7, wherein the menu is activated for a visual display on a screen at a designated time, and buttons are included in the menu on the screen for the user's selection.

9. The apparatus (200) as claimed in claim 7, wherein the button having the selection number value corresponding to the input number value is set up to reduce a waiting time required for the user to input a key and wait until a desired button is selected, via the menu.

10. An apparatus (200) comprising:
a user interface unit (220) installed to enable a user to interact and reproduce a menu on a screen, including a visual display of buttons in the menu; and
a menu controller (223) configured to activate the menu and display buttons in the menu, the menu controller (223) comprising a button selection processor (224) arranged to confirm a maximum number value in selection number values of one or more buttons in the menu, to receive a number value of number keys input by the user, to make a comparison between a digit of the input number value with a digit of the maximum number value, and, if the digit of the input number value matches the digit of the maximum number value, to set up a button having the selection number value corresponding to the input number value as a selection state.

11. The apparatus (200) as claimed in claim 10, wherein the button selection processor (224) is further arranged to make a comparison between a value obtained by dividing the maximum number value by 10 with the input number value, when the digit of the input number value does not match the digit of the maximum number value, and, if the value obtained by dividing the maximum number value by 10 is less than the input number value, to set up a button having the selection number value corresponding to the input number value as the selection state.

12. The apparatus (200) as claimed in claim 10, wherein the button having the selection number value corresponding to the input number value is set up to reduce a waiting time required for the user to input a key and wait until a desired button is selected, via the menu.
